Europäisches Patentamt

European Patent Office

Office européen des brevets

(19)

(11) Numéro de publication: **0 213 998**
**B1**

(12)

# FASCICULE DE BREVET EUROPEEN

(45) Date de publication du fascicule du brevet:
**24.05.89**

(21) Numéro de dépôt: **86401616.7**

(22) Date de dépôt: **18.07.86**

(51) Int. Cl.⁴: **F 16 J 15/32**, B 29 D 31/00

(54) **Bagues d'étanchéité de type radial et procédé de réalisation de telles bagues.**

(30) Priorité: **18.07.85  FR 8511007**

(43) Date de publication de la demande:
**11.03.87 Bulletin 87/11**

(45) Mention de la délivrance du brevet:
**24.05.89 Bulletin 89/21**

(84) Etats contractants désignés:
**AT DE GB IT SE**

(56) Documents cités:
**EP-A- 0 122 319**
**FR-A- 2 443 625**

(73) Titulaire: **PROCAL, Société anonyme dite, Les Franchises, F-52200 Langres (FR)**

(72) Inventeur: **Devouassoux, Serge, St Vallier, 52200 Langres (FR)**
Inventeur: **Marchiset, Michel, Montlandon, F-52600 Chalindrey (FR)**
Inventeur: **Saxod, Michel, Bourg, F-52200 Langres (FR)**

(74) Mandataire: **Leszczynski, André et al, CABINET NONY & CIE. 29 rue Cambacérès, F-75008 Paris (FR)**

## Description

La présente invention est relative aux bagues d'étanchéité de type radial et plus précisément de telles bagues comportant une armature, un corps notamment en élastomère et une lèvre d'étanchéité en matériau à faible frottement, notamment en résine fluorée, telle qu'en particulier le polytétrafluoréthylène (PTFE) chargé ou non, adhérisée sur ledit corps et saillant radialement depuis celui-ci.

De telles bagues peuvent également comprendre une lèvre secondaire, anti-poussière, réalisée dans le même matériau que le corps et prolongeant celui-ci, ainsi qu'un revêtement du même matériau sur la portée de l'armature en appui sur l'arbre sur lequel est mise en place la bague.

Des exemples de réalisation de telles bagues sont décrits dans la demande de brevet allemand 3 309 538, et le document FR-A-2 443 625 décrit le procédé de fabrication par surmoullage d'une rondelle PTFE par un élastomère.

De telles bagues présentent un certain nombre d'inconvénients.

On doit tout d'abord noter qu'en cours de fonctionnement, la contrainte de cisaillement qui s'exerce à l'interface entre le corps en élastomère et la lèvre d'étanchéité en résine fluorée est importante et entraîne un décollement de la lèvre en résine à partir du bord périphérique du corps en élastomère, ce qui provoque une détérioration rapide du joint.

De plus, la zone de flexion de la lèvre en résine fluorée est relativement indéterminée, de telle sorte qu'il n'est pas possible de contrôler avec précision l'appui de la lèvre sur la portée d'étanchéité en regard et il n'est pas non plus possible de contrôler précisément la valeur de charge radiale de la bague.

La présente invention est relative à une bague d'étanchéité du type spécifié en préambule qui évite notamment les inconvénients mentionnés ci-dessus.

La présente invention est également relative à un procédé de réalisation d'une telle bague par moulage par injection.

La bague selon l'invention se caractérise essentiellement par le fait quelle comporte, dans la lèvre d'étanchéité, un évidement annulaire situé dans la face de ladite lèvre en regard dudit corps et dans la partie de la lèvre non adhérisée au corps, à proximité immédiate du bord périphérique dudit corps.

L'évidement selon l'invention peut avantageusement présenter une section circulaire, mais d'autres formes de sections sont envisageables dans le cadre de l'invention, par exemple une section triangulaire.

La profondeur de l'évidement est avantageusement comprise entre environ 0,05 mm et environ 0,2 mm.

On comprend aisément que c'est la zone de la lèvre d'étanchéité en résine fluorée comportant l'évidement, et présentant donc une épaisseur réduite, qui constitue la zone de flexion de la lèvre d'étanchéité, par rapport au corps et à l'armature de la bague, cette zone de flexion étant ainsi parfaitement déterminée. L'on peut également, par une détermination de la profondeur de l'évidement, assurer une épaisseur résiduelle contrôlée de la lèvre en résine fluorée dans cette zone et donc régler la valeur de charge radiale de la bague. La contrainte de cisaillement entre la lèvre d'étanchéité et le corps en élastomère est également réduite dans cette zone, ce qui limite fortement les risques de décollement de la lèvre.

La présente invention a également pour objet un procédé de réalisation d'une telle bague, essentiellement caractérisé par le fait que l'on met en place dans un moule de moulage par injection, comportant un noyau central présentant le long de son bord périphérique une nervure annulaire en saillie, une partie inférieure de moule entourant le noyau central et une partie supérieure de moule apte à coiffer le noyau et la partie inférieure, d'une part une rondelle en résine fluorée préformée ou usinée en la disposant sur le noyau, et d'autre part une armature métallique en la disposant sur la partie inférieure du moule, que l'on referme le moule de manière à pincer la rondelle de résine fluorée entre la partie supérieure du moule et le noyau, la nervure périphérique du noyau réalisant dans ladite rondelle une empreinte correspondant à l'évidement à réaliser sur la lèvre d'étanchéité de la bague et que l'on injecte, par des canaux d'injection prévus à cet effet dans le moule, le matériau, notamment élastomère, destiné à réaliser le corps de la bague, après quoi l'on éjecte la bague terminée.

On note de façon remarquable que la nervure périphérique prévue sur le noyau, outre le fait qu'elle réalise l'évidement prévu sur la lèvre d'étanchéité renforce le pincement de la rondelle en résine fluorée dans le moule et évite tout débordement du matériau injecté au-delà de la zone qui lui est attribuée dans le moule.

Dans le but de mieux faire comprendre l'invention, on va maintenant en décrire à titre d'exemple nullement limitatif un mode de réalisation en se référant au dessin annexé dans lequel:

la fig. 1 représente en demi-coupe une bague selon l'invention

les figures 2 à 4 illustrent trois phases de mise en œuvre du procédé selon l'invention pour la réalisation de la bague illustrée à la fig. 1.

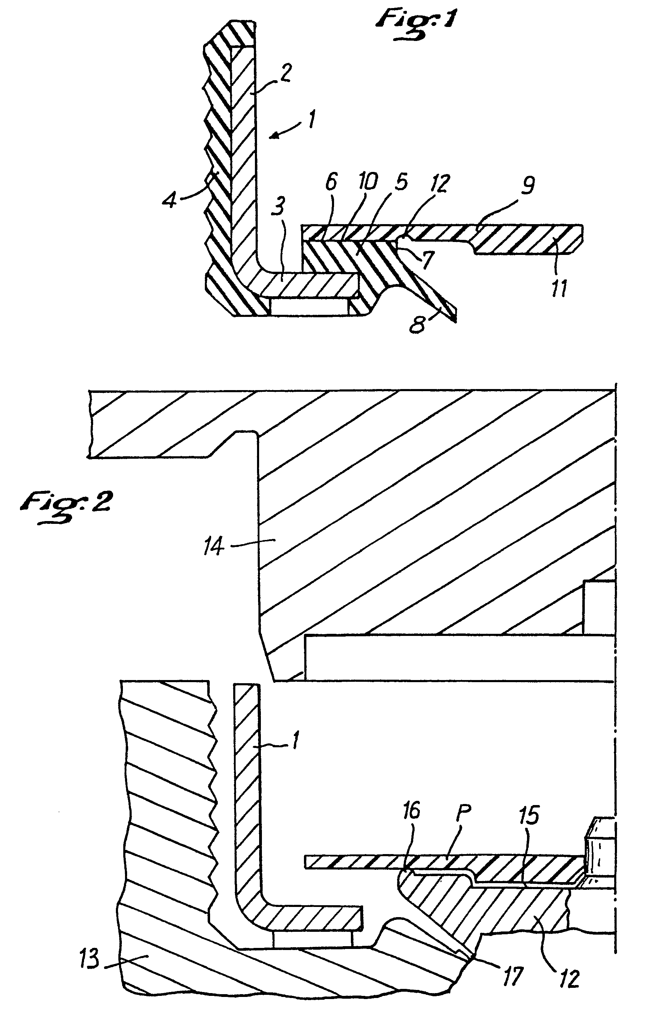

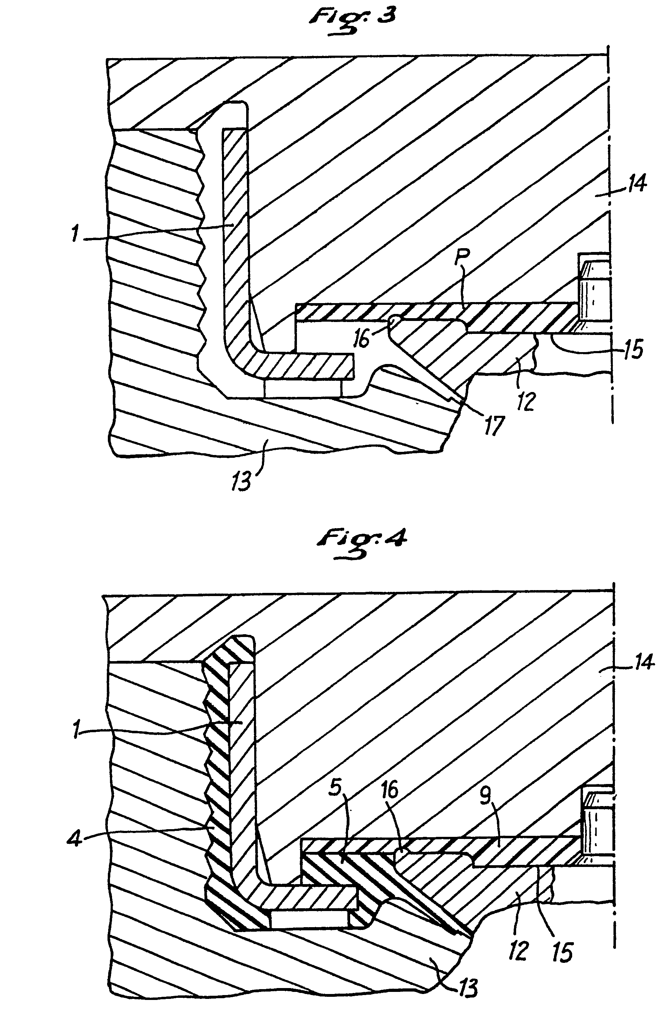

La bague selon l'invention illustrée à la fig. 1 dans sa configuration immédiatement après fabrication comporte de manière conventionelle une armature annulaire métallique 1, comportant une branche longue 2, destinée à venir en appui contre l'arbre, non représenté, sur lequel est montée la bague, et une branche radiale plus courte 3. Sur la branche 2 de l'armature est adhérisé de manière conventionelle un revêtement en élastomère 4 destiné à venir au contact de l'alésage.

Sur la branche 3 de l'armature 1 est adhérisé un corps en élastomère 5 présentant une portée supérieure plane 6 et une portée périphérique externe 7.

Le corps 5 comporte également un prolongement 8 d'un seul tenant constituant une lèvre secondaire anti-poussière. La bague selon l'invention comporte une lèvre d'étanchéité en résine fluorée telle que du PTFE 9 adhérisée par une portée 10 sur la portée supérieure 6 du corps, la lèvre d'étanchéité se prolongeant radialement au-delà de la portée frontale 7 du corps et présentant une surépaisseur d'extrémité 11.

Selon l'invention, il est prévu dans la lèvre d'étanchéité 9 à l'extrémité radialement externe de sa portée 6 un évidement annulaire 12, de section circulaire dans l'exemple illustré. A titre d'exemple, cet évidement présente une profondeur de 0,2 mm et possède un profil circulaire d'un rayon de 0,5 mm.

Cet évidement 12 est ainsi réalisé au niveau de la ligne de raccordement sur la portée externe 7 du corps 5 et de la lèvre d'étanchéité 9.

En se référant aux figures 2 à 4, on va maintenant décrire un procédé de réalisation d'une telle bague par moulage par injection.

A cet effet, on utilise un moule constitué d'un noyau central 12, une partie inférieure de moule 13 et une partie supérieure de moule 14.

Le noyau 12 comporte une portée annulaire 15 servant d'appui à une préforme P sous forme de rondelle annulaire destinée à réaliser la lèvre d'étanchéité 9 de la bague.

La préforme P en résine fluorée, notamment en PTFE, peut être traitée par attaque chimique, de manière connue, pour accroître son aptitude à l'adhésion, et ce, en particulier dans la zone sur laquelle va venir s'appliquer le matériau destiné à réaliser le corps de la bague. Sur le bord périphérique de la portée 15 est une nervure en saillie 16 de profil semi-circulaire, dans l'exemple illustré, destinée à réaliser l'évidement 12 mentionné précédemment de la lèvre d'étanchéité.

On met également en place dans le moule une armature 1.

Le moule comporte en outre des canaux d'injection 17.

On a illustré sur la fig. 2 la disposition des éléments en position d'ouverture du moule.

La fig. 3 illustre le moule en position fermée avant injection. On note que le moule est dimensionné de manière à définir une cavité intérieure dont les dimensions correspondent exactement à celles du corps de la bague et du revêtement de l'armature de telle sorte que lorsque l'on procède à l'injection comme illustré à la fig. 4, le matériau, notamment élastomère, injecté, remplit la cavité du moule et réalise le corps 5 et le revêtement 4. On peut ensuite procéder à l'éjection de la bague terminée du moule.

On comprend que pour réaliser des évidements d'une section différente d'une section circulaire, il suffit de prévoir une nervure 16 sur le noyau 12 du moule présentant une forme correspondante.

## Revendications

1. Bague d'étanchéité de type radial comportant une armature, un corps (5) notamment en élastomère et une lèvre d'étanchéité (9) en matériau à faible frottement, notamment en résine fluorée telle qu'en particulier le polytétrafluoréthylène, adhérisée par le fait qu'elle comporte un évidement annulaire (12) situé dans la face de ladite lèvre (9) en regard dudit corps (5) et dans la partie de la lèvre non adhérisée au corps, à proximité immédiate du bord périphérique (7) dudit corps.

2. Bague selon la revendication 1, caractérisée par le fait que l'évidement (12) présente une section circulaire.

3. Bague selon l'une quelconque des revendications 1 et 2, caractérisé par le fait que la profondeur de l'évidement (12) est comprise entre environ 0,05 mm et environ 0,2 mm.

4. Procédé de réalisation d'une bague selon l'une quelconque des revendications précédentes, caractérisé par le fait que l'on met en place, dans un moule de moulage par injection, comportant un noyau central (12), présentant le long de son bord périphérique une nervure annulaire en saillie (16), une partie inférieure de moule (13) entourant le noyau central (12) et une partie supérieure (14) apte à coiffer le noyau et la partie inférieure, d'une part, une rondelle (P) en résine fluorée préformée ou usinée en la disposant sur le noyau, et d'autre part, une armature métallique (1) en la disposant sur la partie inférieure du moule, que l'on referme le moule de manière à pincer la rondelle de résine entre la partie supérieure du moule et le noyau, la nervure périphérique du noyau réalisant dans ladite rondelle une empreinte correspondant à l'évidement (12) à réaliser sur la lèvre d'étanchéité (9) de la bague, et que l'on injecte par des canaux d'injection (17) prévus à cet effet dans le moule, le matériau, notamment élastomère, destiné à réaliser le corps (5) de la bague, après quoi on éjecte la bague terminée.

## Patentansprüche

1. Radialer Dichtungsring, aufweisend eine Verstärkung, einen Rumpf (5), insbesondere aus Elastomer, sowie eine Dichtungslippe (9) aus einem Material geringer Reibung, insbesondere aus fluoriertem Harz, insbesondere Polytetrafluorethylen, die an dem genannten Rumpf befestigt ist und von diesem radial vorspringt, dadurch gekennzeichnet, daß er eine ringförmige Aussparung (12) aufweist, die sich gegenüber dem Rumpf (5) auf der Oberfläche der Lippe (9) und in dem Teil der Lippe befindet, der nicht am Rumpf befestigt ist, in unmittelbarer Nähe zum Umfangsrand (7) des Rumpfes.

2. Ring nach Anspruch 1, dadurch gekennzeichnet, daß die Aussparung (12) einen kreisförmigen Querschnitt darstellt.

3. Ring nach einem der Ansprüche 1 und 2, dadurch gekennzeichnet, daß die Tiefe der Aussparung zwischen etwa 0,05 mm und etwa 0,2 mm liegt.

4. Herstellungsverfahren für einen Ring nach einem der vorhergehenden Ansprüche, dadurch gekennzeichnet, daß in eine Spritzgußform mit einem Mittelkern (12), der längs seines Umfangs eine ringförmige vorspringende Rippe (16) darstellt, mit einem Form-Unterteil (13), das den Mittelkern (12) umgibt, und mit einem Oberteil (14), das geeignet ist, den Kern und das Unterteil zu bedecken, eingelegt werden: einerseits eine vorgefertigte oder bearbeitete runde Scheibe (P) aus fluoriertem Harz, die auf dem Kern angeordnet wird, und andererseits eine metallische Verstärkung (1), die auf dem Unterteil der Form angeordnet wird, daß die Form so verschlossen wird, daß die runde Scheibe aus fluoriertem Harz zwischen das Oberteil der Form und den Kern geklemmt wird, wobei die umlaufende Rippe des Kerns in der Scheibe einen Abdruck erzeugt, der der auf der Dichtungslippe (9) des Rings herzustellenden Aussparung (12) entspricht, und daß durch für diesen Zweck in der Gußform vorgesehene Einspritzkanäle (17) das Material, insbesondere Elastomer, eingespritzt wird, das den Rumpf (5) des Rings herstellen soll, wonach der fertiggestellte Ring ausgeworfen wird.

## Claims

1. Sealing ring of the radial type comprising a reinforcement, a body (5) made notably of elastomer and a sealing lip (9) made of a material with low frictional properties, notably a fluororesin such as in particular polytetrafluoroethylene, bonded onto the said body and projecting radially from the latter, characterized in that it comprises an annular recess (12) located in the surface of the said lip (9) opposite the said body (5) and in the part of the lip not bonded to the body, in the immediate vicinity of the peripheral edge (7) of the said body.

2. Ring according to claim 1, characterized in that the recess (12) has a circular cross-section.

3. Ring according to either one of claims 1 and 2, characterized in that the depth of the recess (12) is between about 0.05 mm and about 0.2 mm.

4. Method of manufacturing a ring according to any one of the preceding claims, characterized in that there is placed, inside an injection moulding mould comprising a central core (12) with a projecting annular rib (16) along its peripheral edge, a bottom mould part (13) surrounding the central core (12) and a top part (14) designed to cover the core and the bottom part, on the one hand, a washer (P) made of a preformed or machined fluororesin by arranging it on the core, and, on the other hand, a metal reinforcement (1) by arranging it on the bottom part of the mould, in that the mould is closed so as to clamp the fluororesin washer between the top part of the mould and the core, the peripheral rib of the core forming in the said washer an impression corresponding to the recess (12) to be formed on the sealing lip (9) of the ring, and in that the material, notably elastomer, intended to form the body (5) of the ring, is injected through injection channels (17) provided for this purpose in the mould, after which the completed ring is ejected.

*Fig:1*

*Fig:2*

## Fig. 3

## Fig. 4